# EUROPÄISCHE PATENTSCHRIFT

(11) **EP 1 967 751 B1**
(45) Veröffentlichungstag und Bekanntmachung des Hinweises auf die Patenterteilung: **28.10.2009**
(21) Anmeldenummer: 08101754.3
(22) Anmeldetag: 19.02.2008
(51) Int. Cl.: F16D 7/02, F16D 43/26

(54) **Übertragungsvorrichtung zur Übertragung eines Drehmoments**
Transfer device for torque transfer
Dispositif de transmission destiné à la transmission d'un couple

(30) Priorität: 21.02.2007 DE 102007008492
(43) Veröffentlichungstag der Anmeldung: 10.09.2008
(73) Patentinhaber: Kirchner Elektrotechnik GmbH, 96450 Coburg (DE)
(72) Erfinder: Pletea, Tiberiu, 01069 Dresden (DE)
(74) Vertreter: Skuhra, Udo

(56) Entgegenhaltungen:
- WO-A-95/30852
- GB-A- 136 275
- GB-A- 430 967
- US-A- 4 143 747

## Beschreibung

Die vorliegende Erfindung betrifft eine mechanische Übertragungsvorrichtung zur elastischen Übertragung eines Drehmoments.

Um ein Drehmoment bzw. eine Last von einer Antriebswelle auf eine Abtriebswelle zu übertragen, wird eine Übertragungsvorrichtung, wie z.B. eine Kupplung verwendet. Es sind drehelastische Kupplungen bekannt, die Drehzahlschwankungen und Drehzahlstöße dämpfen und Drehschwingungen reduzieren, und somit die Last sanft von der Antriebswelle zur Abtriebswelle übertragen. In solchen drehelastischen Kupplungen bestehen die übertragenden Elemente aus Metall (z.B. Federstahl), aus Gummi, oder aus anderen linear elastischen Elementen, wie z.B. pneumatischen Zylindern oder dergleichen.

Solche herkömmlichen drehelastische Kupplungen weisen jedoch das Problem auf, dass ihre Elastizität nicht genau definiert werden kann. Ferner unterliegt die Elastizität solcher herkömmlichen drehelastischen Kupplungen (insbesondere bei der Verwendung von Gummielementen aber auch bei Federstahl) Schwankungen aufgrund von klimatischen Bedingungen, so dass sie für den Fahrzeugbau oder andere Anwendungen, in welchen konstante Eigenschaften über einen großen Temperaturbereich erforderlich sind, nur begrenzt geeignet sind. Ein weiteres Problem ist Altersdrift, also die Veränderung der mechanischen Eigenschaften über die Zeit aufgrund von Alterungsprozessen.

Weiterhin sind elektromechanische Aktuatoren mit einer Soft-Start-Funktion bekannt, bei der eine allmähliche Zunahme des auf die Abtriebswelle übertragenen Drehmoments mit Hilfe eines bestimmten Strom- bzw. Spannungsprofils erreicht wird, mit dem der anregende Motor beaufschlagt wird. Dies hat jedoch den Nachteil höherer Produktions- und Betriebskosten aufgrund der zusätzlich nötigen Steuerelemente. Außerdem ist eine elektrische Steuerung störanfällig und in bestimmten Umgebungen (beispielsweise aufgrund mangelnder elektromagnetischer Verträglichkeit) nicht wünschenswert.

Dokument US-A-4143747 offenbart den nächstliegenden Stand der Technik.

Es ist somit eine Aufgabe der vorliegenden Erfindung, eine Übertragungsvorrichtung gemäß dem Oberbegriff von Anspruch 1 bereitzustellen, die zuverlässige elastische Eigenschaften aufweist.

Erfindungsgemäß wird diese Aufgabe durch die in Anspruch 1 angegebene Übertragungsvorrichtung gelöst.

Weitere Ausgestaltungen ergeben sich aus den Unteransprüchen.

Dementsprechend vorgesehen ist eine Übertragungsvorrichtung zur Übertragung eines Drehmoments zwischen einer Antriebswelle und einer Abtriebswelle, mit:
- einer Antriebswelle, welche einen Spindelwellenabschnitt aufweist;
- einer Spindelmutter, welche auf dem Spindelwellenabschnitt translatorisch bewegbar ist;
- einem Abtriebselement, welches eine Abtriebswelle aufweist und welches mit der Spindelmutter rotatorisch in Eingriff steht; und
- einer Dämpfungseinrichtung, welche zur elastischen Dämpfung der translatorischen Bewegung der Spindelmutter auf dem Spindelwellenabschnitt vorgesehen ist.

Die der Erfindung zugrunde liegende Idee ist es, die Zusammenwirkung zwischen Spindelmutter und Dämpfungseinrichtung so zu gestalten, dass eine Änderung des Drehmoments auf der Antriebswelle zunächst in eine translatorische Bewegung der Spindelmutter auf dem Spindelwellenabschnitt umgewandelt wird, welche mit zunehmender Dämpfung der translatorischen Bewegung nach und nach eine Änderung des Drehmoments der Abtriebswelle nach sich zieht. Somit wird eine elastische Übertragung von Drehmomenten mit definierbarem Spiel realisiert.

Erfindungsgemäß wird Anordnung ist dabei, dass die elastische Übertragung von Drehmomenten und somit ein Soft-Start mit graduellem Last-Transfer allein mit mechanischen Mitteln erreicht, so dass keine aufwändige elektrische Steuerung notwendig ist. Außerdem kann durch entsprechende Auswahl der einzelnen Elemente (z.B. Feldstärke der Magneten, Gewindesteigung der Spindel, Länge des Spindelwellenabschnitts usw.) das Spiel bzw. die Hysterese genau eingestellt werden.

Es sollte beachtet werden, dass die Ausdrücke "Antriebswelle" und "Abtriebswelle" lediglich illustrativ verwendet werden, der Kraftfluss innerhalb der Vorrichtung jedoch nicht auf eine Richtung eingeschränkt ist. Die erfindungsgemäße Vorrichtung kann bidirektional ausgebildet sein; es können also auch Betriebszustände und -arten vorliegen, in welchen eine Kraft bzw. ein Drehmoment von der Abtriebswelle auf die Antriebswelle übertragen wird.

Bei einer Ausführungsform weist die Dämpfungseinrichtung wenigstens zwei Magneten auf, die jeweils an einem Ende des Spindelwellenabschnitts angeordnet sind. Somit wird eine Dämpfungseinrichtung realisiert, in der die Reibungsverluste gering sind. Dabei können die Magneten beispielsweise als Ringmagneten ausgebildet sein, welche koaxial zum Spindelwellenabschnitt angeordnet sind.

Die Magneten können beispielsweise als Elektromagneten ausgebildet sein. Somit kann das Spiel bzw. die Hysterese der Vorrichtung dynamisch eingestellt werden und den momentanen Betriebsbedingungen angepasst werden.
Alternativ dazu können die Magneten auch als Permanentmagneten ausgebildet sein, z.B. als Neodym-Magneten oder Samarium-Kobalt-Magneten.

In einer möglichen Ausgestaltung der Vorrichtung mit Magneten als Dämpfungseinrichtung weist die Spindelmutter zwei Ringmagneten auf, die jeweils gegenüber den koaxial zum Spindelwellenabschnitt befindlichen Magneten angeordnet sind, wobei gleichartige Pole der Ringmagneten der Spindelmutter und der Magneten der Dämpfungseinrichtung einander gegenüber angeordnet sind, so dass die Spindelmutter im unbelasteten Zustand in der Mitte des Spindelwellenabschnitts gehalten wird.

An den beiden Enden des Spindelwellenabschnitts kann jeweils ein Anschlag vorgesehen sein, welcher die translatorische Bewegung der Spindelmutter begrenzt.

In einer alternativen Ausgestaltung der erfindungsgemäßen Übertragungsvorrichtung weist die Dämpfungseinrichtung zwei Spiralfedern aufweist, welche jeweils zwischen der Spindelmutter und den Enden des Spindelwellenabschnitts angeordnet sind.

Die Spindelmutter ist typischerweise im Verhältnis zu dem Abtriebselement translatorisch bewegbar ist. Somit kann eine Übertragungsvorrichtung realisiert werden, bei der die Antriebswelle und die Abtriebswelle nicht translatorisch sondern lediglich rotatorisch zueinander bewegbar sind.

In einer vorteilhaften Ausgestaltung der erfindungsgemäßen Übertragungsvorrichtung weist das Abtriebselement eine Zylinderhülse auf, die drehfest mit der Spindelmutter gekoppelt ist und starr mit der Abtriebswelle verbunden ist. Somit kann eine besonders kompakte Übertragungsvorrichtung realisiert werden.
Dabei kann die Spindelmutter beispielsweise mittels einer Keilverbindung mit der Zylinderhülse verbunden sein. Somit kann die Spindelmutter drehfest aber translatorisch bewegbar mit der Abtriebswelle gekoppelt sein.

Gemäß einer anderen Ausgestaltung der erfindungsgemäßen Übertragungsvorrichtung ist die Spindelmutter mit dem Abtriebselement starr verbunden ist. Somit kann eine Übertragungsvorrichtung realisiert werden, bei der die Abtriebswelle bei einer Änderung des übertragenen Drehmoments gemeinsam mit der Spindelmutter in axialer Richtung bewegt wird.

Gemäß einer anderen Ausgestaltung der erfindungsgemäßen Übertragungsvorrichtung sind die Antriebswelle und die Abtriebswelle auf unterschiedlichen Rotationsachsen angeordnet.

Somit kann eine Übertragungsvorrichtung realisiert werden, die flexibel in bestehende Antriebslösungen integriert werden kann.

Die Antriebswelle kann beispielsweise über Kugellager in der Dämpfungseinrichtung oder in den Anschlägen gelagert sein.

Es ist ferner möglich, ein Gehäuse zur Aufnahme der Spindelmutter und der Dämpfungseinrichtung vorzusehen.

Ein einer Weiterbildung der erfindungsgemäßen Übertragungsvorrichtung sind zwei Hall-Sensoren vorgesehen, die entlang und außerhalb des Spindelwellenabschnitts angeordnet sind, und welche jeweils ein Positionssignal ausgeben, welches von der Position der Spindelmutter abhängt. Somit kann in einfacher Weise die Position der Spindelmutter auf dem Spindelwellenabschnitt überwacht werden. Durch zusätzliches Vorsehen einer Auswerteeinrichtung, welche auf Basis der von den Hall-Sensoren ausgegebenen Positionssignale ein Drehmomentsignal erzeugt, welches vom übertragenen Drehmoment abhängt, kann weiterhin ein Drehmomentsensor realisiert werden. Dabei wird ausgenutzt, dass die Position der Spindelmutter auf dem Spindelwellenabschnitt von dem übertragenen Drehmoment abhängt.

Die Erfindung wird nachfolgend anhand der in den schematischen Figuren der Zeichnungen angegebenen Ausführungsbeispiele näher erläutert. Es zeigt dabei:
- Fig. 1: eine schematische Schnittdarstellung einer beispielhaften Anordnung einer erfindungsgemäßen Übertragungsvorrichtung;
- Fig. 2A: eine schematische Schnittdarstellung eines Teils der beispielhaften Anordnung der Übertragungsvorrichtung;
- Fig. 2B: Graphen der von der Dämpfungseinrichtung auf die Spindelmutter wirkenden Kräfte;
- Fig. 3A: den Drehzahlverlauf der Antriebswelle bei einem beispielhaften Anlaufvorgang;
- Fig. 3B: den Drehzahlverlauf der Abtriebswelle bei diesem Anlaufvorgang;
- Fig. 4: Drehwinkel der Antriebswelle (Kurve 3) und der Abtriebswelle (Kurve 4) bei einem typischen Anlaufvorgang;
- Fig. 5: eine perspektivische Schnittdarstellung einer ersten Ausführungsform der erfindungsgemäßen Übertragungsvorrichtung;
- Fig. 6: eine perspektivische Schnittdarstellung einer zweiten Ausführungsform der erfindungsgemäßen Übertragungsvorrichtung;
- Fig. 7: eine perspektivische Schnittdarstellung einer dritten Ausführungsform der erfindungsgemäßen Übertragungsvorrichtung;
- Fig. 8: eine perspektivische Schnittdarstellung einer vierten Ausführungsform der erfindungsgemäßen Übertragungsvorrichtung;
- Fig. 9: eine schematische Schnittdarstellung einer fünften Ausführungsform der erfindungsgemäßen Übertragungsvorrichtung;
- Fig. 10: eine schematische Schnittdarstellung einer sechsten Ausführungsform der erfindungsgemäßen Übertragungsvorrichtung; und
- Fig. 11: eine schematische Schnittdarstellung einer siebten Ausführungsform der erfindungsgemäßen Übertragungsvorrichtung.

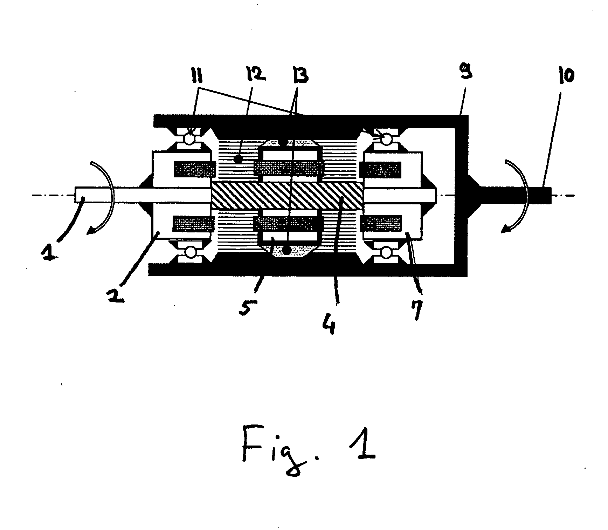

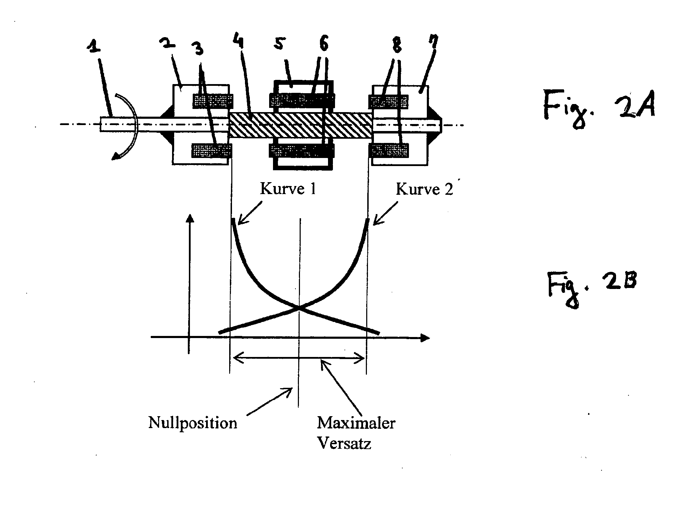

Im Folgenden wird unter Bezugnahme auf die Fign. 1 und 2 der Aufbau einer erfindungsgemäßen Übertragungsvorrichtung zur Übertragung eines Drehmoments beschrieben.

Fig. 1 ist eine schematische Schnittdarstellung einer beispielhaften Anordnung einer solchen Übertragungsvorrichtung. Eine Antriebswelle 1 weist einen Spindelwellenabschnitt 4 auf, auf dem eine Spindelmutter 5 translatorisch bewegbar ist. Die translatorische Bewegung der Spindelmutter 5 wird durch zwei Anschläge 2 und 7, die an den beiden Enden des Spindelwellenabschnitts 4 angeordnet sind, begrenzt. Beispielsweise kann der Spindelwellenabschnitt 4 als Gewindeschnecke ausgebildet sein und die Spindelmutter 5 an ihrem Innenumfang ein entsprechendes Gewinde aufweisen, so dass eine Rotationsbewegung der Antriebswelle 1 zunächst in eine Translationsbewegung der Spindelmutter 5 umgewandelt werden kann. In der dargestellten Anordnung sind der Spindelwellenabschnitt 4, die Spindelmutter 5 und die beiden Anschläge 2 und 7 von einer Zylinderhülse 9 umgeben, die drehfest mit einer Abtriebswelle 10 verbunden ist. Die Zylinderhülse 9 und die Abtriebswelle 10 bilden zusammen ein Abtriebselement. Die Anschläge 2 und 7 sind jeweils mit einem Kugellager 11 in der Zylinderhülse 9 gelagert. Ferner ist die Spindelmutter 5 über ihren Außenumfang drehfest mit der Zylinderhülse 9 gekoppelt, während sie translatorisch bewegbar auf dem Spindelwellenabschnitt 4 angeordnet ist.

In den Anschlägen 2 und 7 ist jeweils vorzugsweise ein Ringmagnet 3 bzw. 8 angeordnet (siehe Fig. 2A). Ferner ist die Spindelmutter 5 mit mindestens einem Ringmagneten 6 versehen. Diese Anordnung von Ringmagneten 3, 6 und 8 ist ein Beispiel für eine Dämpfungseinrichtung zur Dämpfung der translatorischen Bewegung der Spindelmutter auf dem Spindelwellenabschnitt 4. Die Wirkungsweise der Ringmagneten ist in den Figuren 2A und 2B dargestellt.

Fig. 2A zeigt einen Teil der Anordnung in Fig. 1, insbesondere die Antriebswelle 1 sowie die darauf angeordnete Spindelmutter 5 und die seitlich zur Spindelmutter 5 angeordneten Anschläge 2 und 7. Die Ringmagneten 3, 6 und 8 sind jeweils in axialer Richtung magnetisiert. Dabei sind die Pole des Ringmagneten 6 der Spindelmutter 5 jeweils gegenüber von gleichartigen Polen der Ringmagneten 3 und 8 der Anschläge 2 und 7 angeordnet. Die Reihenfolge der Pole der Ringmagneten in Anschlag 2, Spindelmutter 5 und Anschlag 7 ist also beispielsweise N-S S-N N-S oder auch S-N N-S S-N. Es sollte beachten, dass im vorliegenden Beispiel die Spindelmutter 5 lediglich einen Ringmagneten 6 aufweist, jedoch auch mit zwei Ringmagneten versehen sein kann.

Wird die Spindelmutter 5 auf dem Spindelwellenabschnitt 4 von der Nullposition, d.h. von einer mittigen Position des Spindelwellenabschnitts 4, aus nach rechts auf den Anschlag 7 zu bewegt, dann wirkt auf die Spindelmutter 5 aufgrund der Abstoßung zwischen den Ringmagneten 6 und 8 eine nach links zur Nullposition gerichtete Kraft. Diese Rückstosskraft steigt mit abnehmendem Abstand der Spindelmutter 5 zum Anschlag 7. Kurve 2 in Fig. 2B zeigt die dabei auf die Spindelmutter 5 wirkende Kraft. Wird dagegen die Spindelmutter 5 auf dem Spindelwellenabschnitt 4 von der Nullposition aus nach links auf den Anschlag 2 zu bewegt, dann wirkt auf die Spindelmutter 5 aufgrund der Abstoßung zwischen den Ringmagneten 6 und 3 eine nach rechts zur Nullposition gerichtete Kraft. Diese Rückstosskraft steigt mit abnehmendem Abstand der Spindelmutter 5 zum Anschlag 2. Kurve 1 in Fig. 2B zeigt die dabei auf die Spindelmutter 5 wirkende Kraft.

Wenn kein Drehmoment auf die Antriebswelle 1 und die Spindelmutter 5 einwirkt, dann bewegt sich die Spindelmutter 5 zur Nullposition, in welcher die von den Ringmagneten 3 und 8 auf die Spindelmutter 5 wirkenden Kräfte im Gleichgewicht sind. Die Nullposition ist also die Ruheposition der Spindelmutter 5.

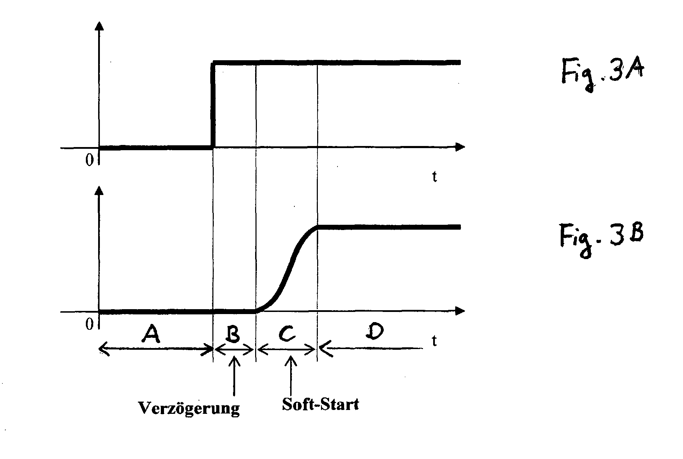

Mit der in Fig. 1 dargestellten Anordnung lässt sich somit eine elastische bzw. hysteresebehaftete Übertragung von Drehmomenten von der Antriebswelle 1 auf die Abtriebswelle 10 erreichen. Diese wird unter Bezugnahme auf die Figuren 3A und 3B näher erläutert.

Fig. 3A zeigt schematisch die Drehzahl (Winkelgeschwindigkeit) der Antriebswelle 1 bei einem beispielhaften Anlaufvorgang. Fig. 3B zeigt die Drehzahl (Winkelgeschwindigkeit) der Abtriebswelle 10 bei diesem Anlaufvorgang.
In der Ausgangsposition befinden sich die Antriebswelle 1 und die Abtriebswelle 10 in Ruhelage und die Spindelmutter 5 ist in der Nullposition. Dieser Zustand entspricht der Phase A (in Fig. 3B). Wenn nun die Antriebswelle 1 anfängt zu rotieren, dann wird die Spindelmutter 5 auf dem Spindelwellenabschnitt 4 translatorisch (beispielsweise nach rechts) bewegt. Zu diesem Zeitpunkt rotieren die Spindelmutter 5 und folglich die damit rotatorisch gekoppelte Abtriebswelle 10 noch nicht. Die Spindelmutter 5 bewegt sich jedoch translatorisch relativ zur sie umgebenden Zylinderhülse 9. Diese Phase B entspricht einer Verzögerung und somit also einem für die Übertragungsvorrichtung charakteristischen Spiel.

Wenn sich die Spindelmutter 5 nun dem Anschlag 7 nähert, dann bremst die von den Ringmagneten 6 und 8 verursachte Rückstosskraft den Vortrieb der Spindelmutter 5 ab und die translatorische Bewegung der Spindelmutter 5 wird gedämpft. Gleichzeitig beginnt die Spindelmutter 5 zu rotieren und ein Drehmoment über die Zylinderhülse 9 auf die rotatorisch mit ihr gekoppelte Abtriebswelle 10 zu übertragen. Dies ergibt sich aus der kinematischen Leistungsbilanz der Spindelmutter 5: Die von der Spindelwelle 4 auf die Spindelmutter 5 wirkende Kraft wird in einen translatorischen Teil und einen rotatorischen Teil umgesetzt. Je mehr also die translatorische Bewegung der Spindelmutter 5 von den Ringmagneten 8 abgebremst wird, desto größer wird der rotatorische Anteil, bis die Spindelmutter 5 schließlich eine nahezu rein rotatorische Bewegung ausführt (Phase C). Wie aus Fig. 3B ersichtlich ist, wird somit ein sanftes Anlaufen der Abtriebswelle 10 erreicht.

In Phase D ist schließlich ein stationärer Zustand erreicht, in dem die auf die Spindelmutter 5 wirkende Federkraft der Ringmagneten im Gleichgewicht mit der Vortriebskraft der Spindelwelle steht. Die Spindelmutter 5 befindet sich in diesem Zustand also nicht in der Nullposition sondern an einer drehmomentabhängigen Position zwischen der Nullposition und einem der Anschläge 2 und 7. Ferner überträgt in diesem Zustand die Spindelmutter 5 das gesamte Drehmoment von der Antriebswelle 1 auf die rotatorisch mit der Spindelmutter 5 gekoppelte Abtriebswelle 10.

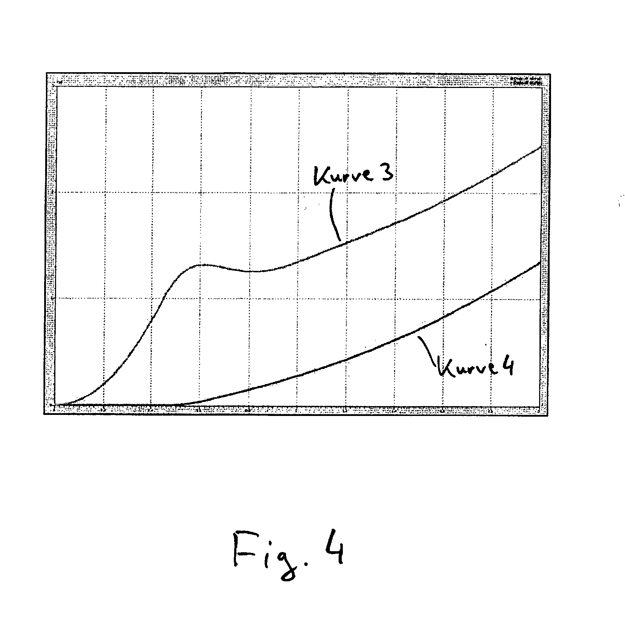

Fig. 4 zeigt den Drehwinkel der Antriebswelle 1 (Kurve 3) und der Abtriebswelle 10 (Kurve 4) bei einem typischen Anlaufvorgang. In dieser Darstellung wird die Federwirkung der Ringmagneten besonders deutlich. Nach einem schnellen Andrehen der Antriebswelle 1 wird diese bis zum Stillstand abgebremst und federt leicht zurück (lokales Maximum in Kurve 3), während die Abtriebswelle 10 sanft anläuft.

Wird im stationären Zustand (Phase D) die Antriebswelle 1 schlagartig abgebremst oder der Drehsinn der Antriebswelle 1 ruckartig umgekehrt, dann folgt die Abtriebswelle 10 dieser Drehmomentänderung mit Verzögerung und in einer durch die Federwirkung gedämpften Weise. Es wird also eine hysteresebehaftete Übertragung des Drehmoments von der Antriebswelle 1 auf die Abtriebswelle 10 erreicht.

Durch eine geeignete Wahl der Stärke der Ringmagneten lässt sich dabei das Spiel und somit der Hystereseeigenschaften der Übertragung genau einstellen. Bei stärkerer Magnetkraft ist dieses Spiel kleiner und bei geringerer Magnetkraft größer. Es lässt sich somit auch ein Hysteresebereich von mehr als 360° realisieren. Andere Parameter, mit denen Spiel und Hysterese-Eigenschaften beeinflusst werden können, sind z.B. die Länge des Spindelwellenabschnitts 4, die Steigung des Spindelgewindes und das Gewicht der Spindelmutter 5.

Die Ringmagneten können beispielsweise als Permanentmagneten ausgebildet sein, z.B. als Neodym-Magneten oder Samarium-Kobalt-Magneten. Alternativ dazu ist es auch möglich, insbesondere für die Ringmagneten 3 und 8 Elektromagneten zu verwenden, welche von einem Steuergerät (nicht näher dargestellt) ansteuerbar sind. Die Stärke des Magnetfeldes ist somit extern steuerbar. Dies hat den Vorteil, dass das Spiel bzw. die Hysterese dynamisch eingestellt werden und den Betriebsbedingungen angepasst werden kann. Dabei können die beiden Magneten 3 und 8 auch auf unterschiedliche Stärken eingestellt werden, wodurch bestimmte Hysterese-Profile verwirklicht werden können und für eine Drehrichtung ein geringeres Spiel als für die andere eingestellt werden kann. Außerdem können durch die dynamische Ansteuerung der Elektromagneten Oszillationen vermieden werden.

In der vorausgehenden generellen Beschreibung der erfindungsgemäßen Übertragungsvorrichtung wurden Magneten als Beispiele für eine Dämpfungseinrichtung genannt, es ist aber ebenso möglich Gummielemente, Spiralfedern oder andere Federelemente anstelle von Magneten als Dämpfungseinrichtung zu verwenden, wie anhand der folgenden Beispiele verdeutlicht wird.

### Erste Ausführungsform

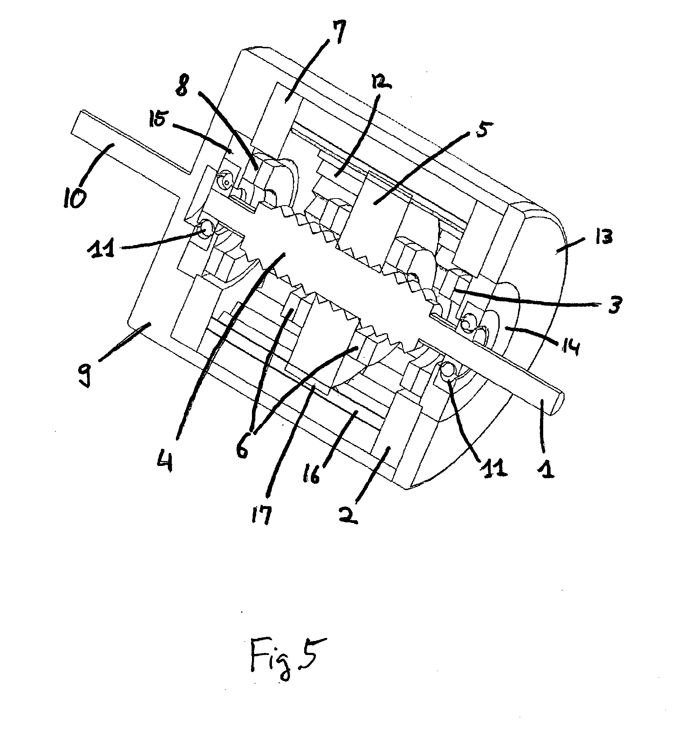

Fig. 5 zeigt eine perspektivische Schnittdarstellung einer ersten konkreten Ausführungsform der oben schematisch beschriebenen Anordnung. Wie oben beschrieben ist die Spindelmutter 5 auf dem Spindelwellenabschnitt 4 der Antriebswelle 1 bewegbar angeordnet. An den beiden Seiten der Spindelmutter 5 ist jeweils ein Ringmagnet 6 vorgesehen. Die Antriebswelle 1 ist mit Kugellagern 11 in einem Gehäuse gelagert, welches die Zylinderhülse 9 und ein daran befestigtes Abdeckflansch 13 umfasst. Das antriebsseitige Kugellager 11 ist mit einer Lageraufnahme 14 im Abdeckflansch befestigt. Das abtriebsseitige Kugellager 11 ist mit einer Lageraufnahme 15 in der Zylinderhülse 9 befestigt.

Im antriebsseitigen Ende der Zylinderhülse 9 ist der Anschlag 2 vorgesehen, welcher als Magnetaufnahme für den darin angeordneten Ringmagneten 3 dient. Im abtriebsseitigen Ende der Zylinderhülse ist der Anschlag 7 vorgesehen, welcher als Magnetaufnahme für den darin angeordneten Ringmagneten 8 dient. In Fig. 5 sind Nord- und Südpol der Ringmagneten 3, 6 und 8 durch eine Zweiteilung der Magneten angedeutet. Tatsächlich sind die Ringmagneten 3, 6 und 8 jedoch einstückig ausgebildet und Nord- und Südpol sind von außen nicht erkennbar.

Am Innenumfang der Zylinderhülse 9 sind vorzugsweise Keilelemente 16 ausgebildet, welche in entsprechende Keilelemente 17 am Außenumfang der Spindelmutter 5 eingreifen. Somit ist die Spindelmutter 5 translatorisch bewegbar und steht gleichzeitig rotatorisch im Eingriff mit der Zylinderhülse 9. Es wird also eine einfache Linearführung der Spindelmutter 5 mittels planarer Flächen realisiert. Die Zylinderhülse 9 ist drehfest mit der Abtriebswelle 10 verbunden und kann, wie im in Fig. 5 dargestellten Beispiel, einstückig mit ihr ausgebildet sein.

Mit dieser Anordnung lassen sich die oben beschriebenen Effekte erzielen. Es wird also eine elastische Kupplung bereitgestellt, die über eine hysteresebehaftete Übertragung von Drehmomenten ermöglicht. Dabei ist das bereitgestellte Spiel durch entsprechende Auswahl der oben genannten Parameter fest definierbar.

Besonders zweckmäßig bei dieser Ausführungsform ist die einfache Integration in vorhandene Antriebsstränge aufgrund der identischen Drehachse von Antriebswelle 1 und Abtriebswelle 10. Weiterhin weist diese Ausführungsform einen kompakten Aufbau auf.

### Zweite Ausführungsform

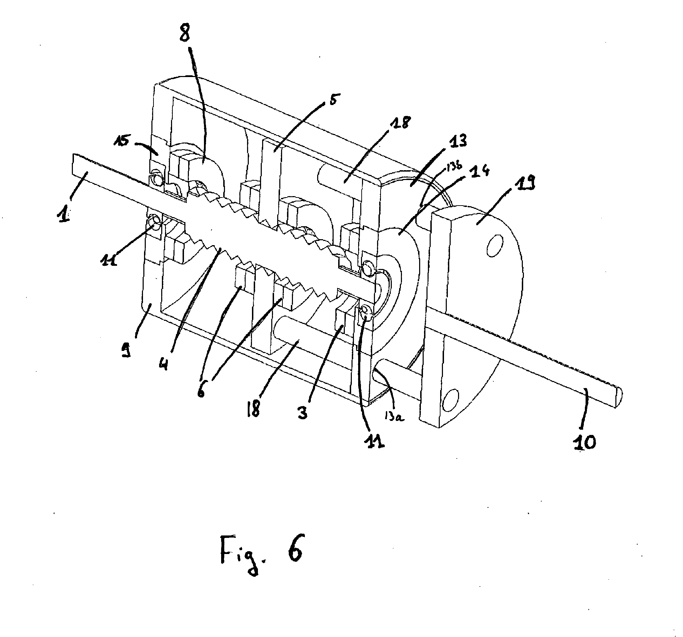

Fig. 6 zeigt eine perspektivische Schnittdarstellung einer zweiten konkreten Ausführungsform der oben schematisch beschriebenen Anordnung. In Fig. 6 sind gleiche bzw. funktionsgleiche Elemente wie in Fig. 1 und 5 mit gleichen Bezugszeichen bezeichnet und werden nicht näher erläutert. Die Erläuterungen dieser Elemente in Bezug auf Fig. 1 und 5 gelten also analog auch für die in Fig. 6 gezeigten Elemente.

Ein wesentlicher Unterschied zu der oben erläuterten ersten Ausführungsform besteht darin, dass die Spindelmutter 5 nicht translatorisch gegenüber der Abtriebswelle 10 bewegbar ist, sondern auch translatorisch fest mit dieser verbunden ist. Die Spindelmutter 5 ist dazu mit mehreren (z.B. drei) Führungsstangen 18 fest mit einem Anschlussflansch 19 verbunden, welches rotationsfest auf die Abtriebswelle 10 aufgeflanscht ist. Die Spindelmutter 5 dabei ist starr mit einem Ende der Führungsstangen 18 und das Anschlussflansch 19 ist starr mit dem anderen Ende der Führungsstangen 18 verbunden.

Die Spindelmutter 5 ist mittels eines Gleitlagers in der Zylinderhülse 9 rotierbar gelagert. An der der Antriebswelle 1 zugewandten Seite weist die Zylinderhülse 9 einen Zylinderboden auf, in welchem eine Aussparung vorgesehen ist, in die die Lageraufnahme 15 eingepasst ist. In der Lageraufnahme 15 ist das Kugellager 11 aufgenommen. Auf dem der Abtriebswelle 10 zugewandten Seite ist die Zylinderhülse 9 mit einem Abdeckflansch 13 abgeschlossen, welches mittels eines Gleitlagers in der Zylinderhülse 9 rotierbar gelagert ist. Der Abdeckflansch 13 weist mehrere Durchgangsöffnungen 13a, 13b auf, durch die die Führungsstangen 18 hindurchgeführt sind. Der Abdeckflansch 13 ist derart in der Zylinderhülse 9 gelagert, dass er in der Zylinderhülse 9 drehbar, aber nicht translatorisch bewegbar ist. Dabei wird das Drehmoment von der Spindelmutter 5 über die Führungsstangen 18 auf den Abdeckflansch 13 übertragen. Der Abdeckflansch 13 dreht sich also stets mit derselben Winkelgeschwindigkeit wie die Spindelmutter 5, wobei die Spindelmutter 5 im Verhältnis zum Abdeckflansch 13 translatorisch bewegbar ist.

Der Anschlussflansch 19 überträgt sowohl die translatorische als auch die rotatorische Bewegung der Spindelmutter 5 auf die Abtriebswelle 10. In der vorliegenden Ausführungsform wird die Abtriebswelle 10 also bei einer Änderung des Drehmoments der Antriebswelle 1 gemeinsam mit der Spindelmutter 5 in axialer Richtung bewegt, wobei die Länge dieser axialen Verschiebung vom übertragenen Drehmoment abhängt. Andere Aspekte der vorliegenden Ausführungsform, insbesondere das Hysterese-Verhalten beim Starten und Stoppen, sind im Wesentlichen wie in der ersten Ausführungsform beschrieben.

Diese Ausgestaltung lässt insbesondere eine drehmomentabhängige axiale Verschiebung der Abtriebswelle zu erreichen. Darüber hinaus werden von dieser Ausführungsform auch die Effekte der ersten Ausführungsform erreicht, wie z.B. die Möglichkeit, eine elastische Kupplung mit einstellbarem Spiel und Hysterese bereitzustellen.

### Dritte Ausführungsform

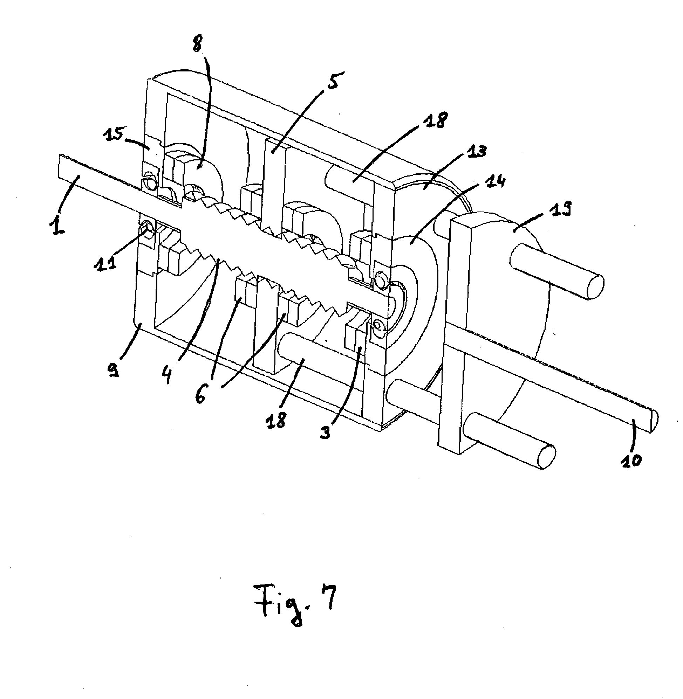

Fig. 7 zeigt eine perspektivische Schnittdarstellung einer dritten konkreten Ausführungsform der oben schematisch beschriebenen Anordnung. In Fig. 7 sind gleiche bzw. funktionsgleiche Elemente wie in Fig. 1, 5 und 6 mit gleichen Bezugszeichen bezeichnet und werden nicht näher erläutert. Die Erläuterungen dieser Elemente in Bezug auf Fig. 1, 5 und 6 gelten also analog auch für die in Fig. 7 gezeigten Elemente.

Auch in dieser Ausführungsform wird das Drehmoment von der Spindelmutter 5 über die durch das Abdeckflansch 13 geführten Führungsstangen 18 und dem Anschlussflansch 19 an die Abtriebswelle 10 gegeben. Ein wesentlicher Unterschied zu der oben erläuterten zweiten Ausführungsform besteht darin, dass die Führungsstangen in dieser dritten Ausführungsform nicht fest mit dem Anschlussflansch 19 verbunden sind, sondern (beispielsweise mit einem Lineargleitlager) derart in dem Anschlussflansch 19 gleitend gelagert sind, so dass die Translationsbewegung der Spindelmutter 5 nicht an dem Anschlussflansch 19 und die Abtriebswelle 10 weitergegeben wird. Aus diesem Grunde sind die Führungsstangen 18 wesentlich länger ausgestaltet als in der zweiten Ausführungsform und erstrecken sich, wenn die Spindelmutter 5 in der Nullposition angeordnet ist, über den Anschlussflansch 19 hinaus, um eine translatorische Bewegung der Spindelmutter 5 in beide Richtungen von der Nullposition aus zu ermöglichen.

Das Betriebsverhalten dieser Ausführungsform entspricht dem der ersten Ausführungsform und die genannten Effekte der ersten Ausführungsform werden auch hier erreicht. Zwar ist diese dritte Ausführungsform in der Fertigung aufwendiger als die erste Ausführungsform, da mehrere parallele Flächen erzeugt werden müssen, allerdings kann es durch entsprechendes Einstellen der Lager und Vorspannen der Spindelmutter spielfrei gestaltet werden. Demgegenüber wird gegenüber der ersten Ausführungsform erreicht, dass die Anzahl der Reibstellen niedriger ist als in der dritten Ausführungsform, und es weniger Belastungsfälle gibt, die zu einem Verkanten führen können.

### Vierte Ausführungsform

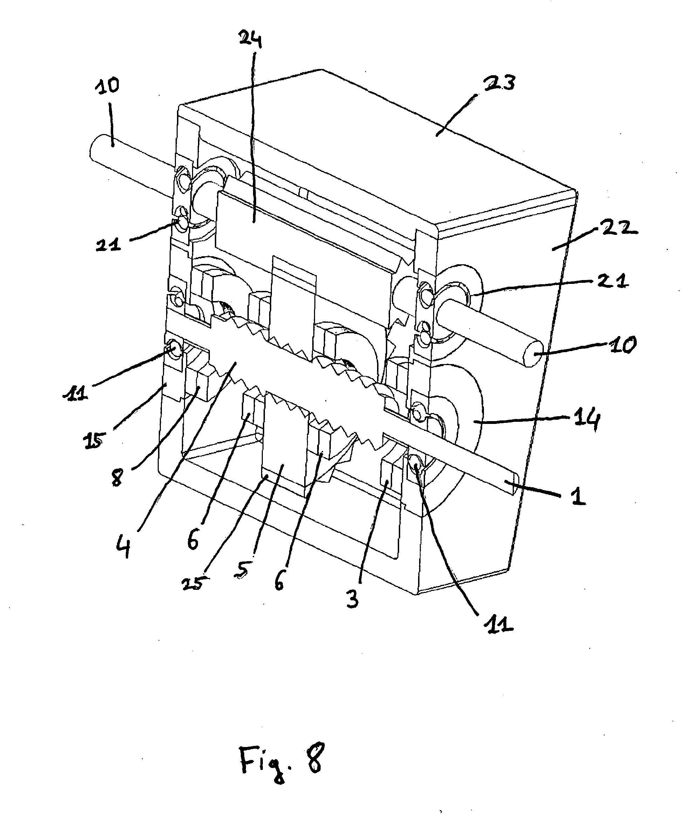

Fig. 8 zeigt eine perspektivische Schnittdarstellung einer vierten konkreten Ausführungsform der oben schematisch beschriebenen Anordnung. In Fig. 8 sind gleiche bzw. funktionsgleiche Elemente wie in Fig. 1 und 5 mit gleichen Bezugszeichen bezeichnet und werden nicht näher erläutert. Die Erläuterungen dieser Elemente in Bezug auf Fig. 1 und 5 gelten also analog auch für die in Fig. 8 gezeigten Elemente.

Die vierte Ausführungsform in Fig. 8 zeichnet sich hauptsächlich dadurch aus, dass die Antriebswelle 1 und die Abtriebswelle 10 nicht koaxial zueinander, sondern auf unterschiedlichen Drehachsen angeordnet sind.

Die Antriebswelle 1 und die Abtriebswelle 10 sind mit Kugellagern 11 und 21 in einem Gehäuse 22 gelagert. Das Gehäuse ist mit einem Gehäusedeckel 23 abgeschlossen. Dabei wird die Antriebswelle 1 lediglich aus der einen Gehäuseseite hinausgeführt, wohingegen die Abtriebswelle 10 aus beiden Gehäuseseiten herausgeführt wird. Dies führt dazu, dass die Rotationsleistung abtriebsseitig auf beiden Seiten des Gehäuses bzw. von zwei Getriebesträngen genutzt werden kann.

Die Antriebswelle 1 und die Abtriebswelle 10 sind parallel zueinander angeordnet. Die Abtriebswelle 10 weist einen als breites Zahnrad ausgebildeten Zahnradabschnitt 24 auf und zwar im Wesentlichen mit einer Länge, die dem Spindelwellenabschnitt 4 entspricht. Die Spindelmutter 5 ist hierbei nicht wie in der ersten Ausführungsform mit Keilelementen 17, sondern mit einer Verzahnung 25 versehen (hier lediglich schematisch dargestellt) und somit als Stirnrad ausgebildet. Alternativ zu einer Verzahnung 25 ist auch eine Kraftübertragung mittels Keilelementen möglich. Die Verzahnung 25 der Spindelmutter 5 greift in die Zähne des Zahnradabschnitts 24 und überträgt somit ein Drehmoment von der Spindelmutter 5 auf die Abtriebswelle 10. Auch hier stehen also die Spindelmutter 5 und die Abtriebswelle 10 rotatorisch miteinander in Eingriff. Gleichzeitig ist die Spindelmutter 5 translatorisch bewegbar zur Abtriebswelle 10. Die Ringmagnete 3 und 8 sind auf den Lageraufnahmen 14 bzw. 15 befestigt, und dienen in dieser Ausführungsform als Anschläge.

Auch mit dieser Anordnung lassen sich die oben beschriebenen Effekte erzielen. Beim Anlaufen der Antriebswelle 1 bewegt sich die Spindelmutter 5 zunächst entlang des Zahnradabschnitts 24 der Abtriebswelle 10, bis diese translatorische Bewegung durch die Ringmagneten abgebremst wird. Gleichzeitig erfolgt ein langsamer Anlauf der Übertragung des Drehmoments auf die Abtriebswelle 10. Es wird also eine elastische Kupplung bereitgestellt, die eine hysteresebehaftete Übertragung von Drehmomenten ermöglicht. Dabei ist das bereitgestellte Spiel fest definierbar. Besonders vorteilhaft bei dieser Anordnung ist, dass Antrieb und Abtrieb auf unterschiedlichen Achsen angeordnet sind, und somit die Integration in bestehende Antriebslösungen am flexibelsten gestaltet werden kann.

### Fünfte Ausführungsform

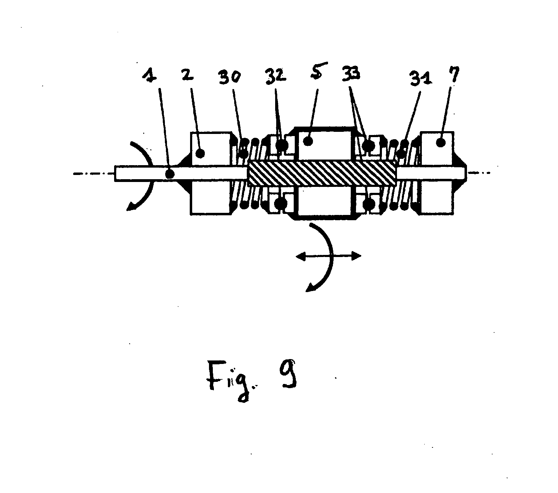

Fig. 9 zeigt eine schematische Schnittdarstellung eines Teils einer fünften Ausführungsform der oben schematisch beschriebenen Anordnung. Die Darstellung in Fig. 9 entspricht der Darstellung in Fig. 2 und zeigt die fünfte Ausführungsform ohne die Zylinderhülse und damit fest verbundene Abtriebswelle. In Fig. 9 sind gleiche bzw. funktionsgleiche Elemente wie in Fig. 1 und 2 mit gleichen Bezugszeichen bezeichnet und werden nicht näher erläutert. Die Erläuterungen dieser Elemente in Bezug auf Fig. 1 und 2 gelten also analog auch für die in Fig. 9 gezeigten Elemente.

Die fünfte Ausführungsform unterscheidet sich von den bisher beschriebenen Ausführungsformen hauptsächlich dadurch, dass als Dämpfungselemente zwei Spiralfedern 30, 31 vorgesehen sind, welche auf den beiden Seiten der Spindelmutter 5 bzw. Spindelwellenabschnitt 4 um die Antriebswelle 1 bzw. den Spindelwellenabschnitt 4 angeordnet sind. Die Spiralfeder 30 ist an ihrem einen Ende mit dem Anschlag 2 verbunden und an ihrem anderen Ende mit der einen Seite eines Axiallagers 32 verbunden, welches beispielsweise als Axial-Kugellager oder dergleichen ausgebildet sein kann. Die andere Seite des Axiallagers 32 ist fest mit der Spindelmutter 5 verbunden. In ähnlicher Weise ist die Spiralfeder 31 an ihrem einen Ende mit dem Anschlag 7 verbunden und an ihrem anderen Ende mit der einen Seite eines Axiallagers 33 verbunden. Die andere Seite des Axiallagers 33 ist fest mit der Spindelmutter 5 verbunden.

Es kann vorgesehen sein, die Spiralfedern vorzuspannen, um ungünstige Betriebszustände zu vermeiden. In der Nullposition der Spindelmutter 5 wirkt dann von jeder der beiden Spiralfedern 30 und 31 eine Federkraft auf die Spindelmutter 5, wobei sich diese beiden Federkräfte in der Nullposition aufheben. Wird die Spindelmutter 5 aus der Nullposition ausgelenkt, dann wird eine der Spiralfedern noch weiter komprimiert, während sich die andere ihrem entspannten Zustand nähert, so dass insgesamt stets eine Federkraft auf die Spindelmutter 5 in Richtung der Nullposition wirkt.

Als alternative Ausgestaltung ist es auch möglich, die Spiralfedern fest mit der Spindelmutter 5 zu verbinden und mittels axialen Lagern mit den Anschlägen 2 und 7 zu verbinden.

Die Wirkungsweise dieser Ausführungsform entspricht der für die erste Ausführungsform beschriebenen, mit dem Unterschied, dass die auf die Spindelmutter 5 wirkende Dämpfungskraft hier von den Spiralfedern 30 und 31 bereitgestellt wird. Beim Anlaufen der Antriebswelle 1 bewegt sich die Spindelmutter 5 zunächst entlang des Spindelwellenabschnitts 4, bis diese translatorische Bewegung durch die Spiralfedern abgebremst wird. Gleichzeitig erfolgt ein langsamer Start der Übertragung des Drehmoments auf die Abtriebswelle 10. Es wird also auch hier eine elastische Kupplung bereitgestellt, die eine hysteresebehaftete Übertragung von Drehmomenten mit fest einstellbarem Spiel ermöglicht.

### Sechste Ausführungsform

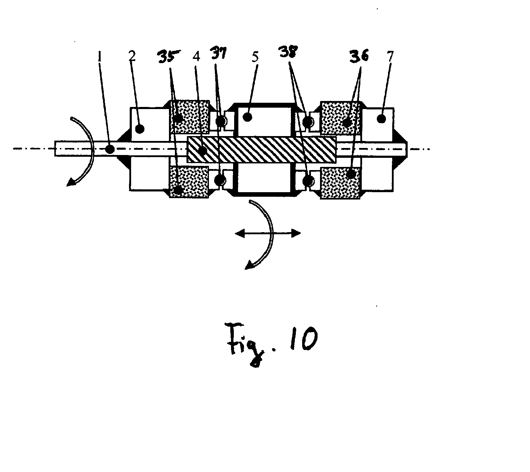

Fig. 10 zeigt eine schematische Schnittdarstellung eines Teils einer sechsten Ausführungsform der oben schematisch beschriebenen Anordnung. Die Darstellung in Fig. 10 entspricht der Darstellung in Fig. 2 und zeigt die sechste Ausführungsform ohne die Zylinderhülse und damit fest verbundene Abtriebswelle. In Fig. 10 sind gleiche bzw. funktionsgleiche Elemente wie in Fig. 1 und 2 mit gleichen Bezugszeichen bezeichnet und werden nicht näher erläutert. Die Erläuterungen dieser Elemente in Bezug auf Fig. 1 und 2 gelten also analog auch für die in Fig. 10 gezeigten Elemente.

Die sechste Ausführungsform unterscheidet sich von den bisher beschriebenen Ausführungsformen hauptsächlich dadurch, dass als Dämpfungselemente zwei torusförmige Gummielemente 35, 36 vorgesehen sind, welche auf den beiden Seiten der Spindelmutter 5 um den Spindelwellenabschnitt 4 angeordnet sind. Das Gummielement 35 ist an seinem einen Ende am Anschlag 2 befestigt und an seinem anderen Ende mit der einen Seite eines Axiallagers 37 verbunden, welches beispielsweise als Axial-Kugellager oder dergleichen ausgebildet sein kann. Die andere Seite des Axiallagers 37 ist fest mit der Spindelmutter 5 verbunden. In ähnlicher Weise ist das Gummielement 35 an seinem einen Ende am Anschlag 7 befestigt und an seinem anderen Ende mit der einen Seite eines Axiallagers 38 verbunden. Die andere Seite des Axiallagers 38 ist fest mit der Spindelmutter 5 verbunden.

Die Gummielemente 35, 36 sind elastisch verformbar und üben (ähnlich den Spiralfedern der fünften Ausführungsform) Federkräfte auf die Spindelmutter 5 aus. Die Wirkungsweise dieser Ausführungsform entspricht der für die erste Ausführungsform beschriebenen, mit dem Unterschied, dass die auf die Spindelmutter 5 wirkenden Dämpfungskräfte hier von den Gummielemente 35 und 36 bereitgestellt werden. Beim Anlaufen der Antriebswelle 1 bewegt sich die Spindelmutter 5 zunächst entlang des Spindelwellenabschnitts 4, bis diese translatorische Bewegung durch die Gummielemente abgebremst wird. Gleichzeitig erfolgt ein langsamer Anlauf der Übertragung des Drehmoments auf die Abtriebswelle 10. Es wird also auch hier eine elastische Kupplung bereitgestellt, die eine hysteresebehaftete Übertragung von Drehmomenten mit fest einstellbarem Spiel ermöglicht.

### Siebte Ausführungsform

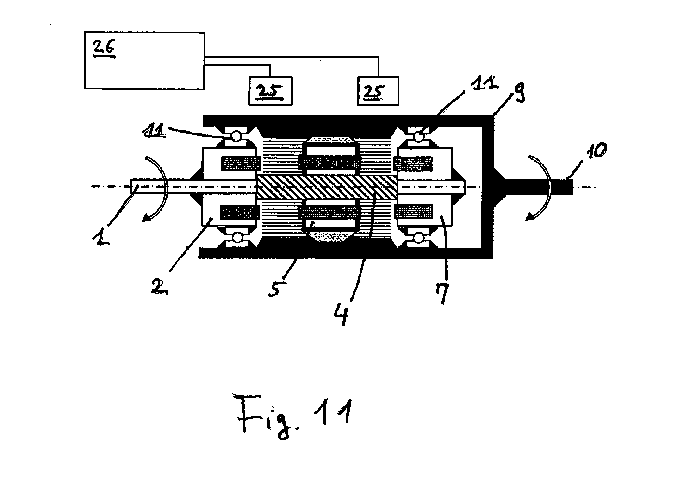

Fig. 11 zeigt eine schematische Schnittdarstellung einer siebten Ausführungsform der vorliegenden Erfindung.

Gemäß dieser Ausführungsform sind entlang der Zylinderhülse 9 zwei Hall-Sensoren 25 angeordnet, welche ausgangsseitig mit einer Auswerteschaltung 26 verbunden sind. Andere Aspekte dieser Ausführungsform sind wie beispielsweise für die erste Ausführungsform beschrieben. Die zwei Hall-Sensoren 25 sind jeweils mittig zwischen der Nullposition und den Anschlägen 2 bzw. 7 angeordnet.

Die Zylinderhülse 9 ist aus einem nicht-ferromagnetischen Material gefertigt, wie z.B. Messing oder auch Kunststoff. Aus diesem Grunde kann der von den Magneten 3, 6 und 8 ausgehende magnetische Fluss die Zylinderhülse 9 durchdringen und die Hall-Sensoren 25 erreichen.

Der von den Magneten 3, 6 und 8 ausgehende magnetische Fluss ist abhängig von der Position der Spindelmutter 5 auf dem Spindelwellenabschnitt 4. Die Hall-Sensoren 25 erzeugen jeweils ein Ausgangssignal, welches vom magnetischen Feld und somit von der Position der Spindelmutter 5 abhängig ist. Die Auswerteeinheit 26 vergleicht diese beiden Ausgangssignale und erzeugt wiederum ein Signal, welches die Position der Spindelmutter 5 anzeigt.

Da die Position der Spindelmutter 5 im stationären Zustand im direkten Zusammenhang mit dem übertragenen Drehmoment steht, lässt sich diese Anordnung somit vorteilhaft als Drehmomentsensor einsetzen.

Weiterhin lässt sich die somit gewonnene Information über die Position der Spindelmutter 5 auch zur Steuerung der Anordnung nutzen. So können in einer vorteilhaften Ausgestaltung der oben beschriebenen Anordnung mittels eines Steuergeräts ansteuerbare Elektromagnete für die Magneten 3 und 8 in den Anschlägen 2 bzw. 7 verwendet werden. Dabei kann eine Steuerung eingerichtet werden, welche mittels der Hall-Sensoren 25 und der Auswerteeinrichtung 26 die Position der Spindelmutter 5 sowie deren Veränderung erfasst. Die Stärke des Magnetfeldes der Elektromagneten lässt sich dann beispielsweise in Abhängigkeit von der Position der Spindelmutter 5 und/oder der Veränderung dieser Position steuern. Somit können definierte Hysteresekurven sowie Spieleigenschaften erreicht werden, oder auch um Oszillationen vermieden werden. Es ist auch möglich, die Position der Spindelmutter 5 mit lediglich einem Hall-Sensor 25 festzustellen.

Obwohl die obigen Ausführungsformen vorstehend anhand von bevorzugten Ausführungsbeispielen beschrieben wurde, sind sie darauf nicht beschränkt, sondern auf vielfältige Art und Weise modifizierbar. Insbesondere sind verschiedene Merkmale der oben beschriebenen Ausgestaltungen miteinander kombinierbar.

Beispielsweise können die Spindelmutter und die Abtriebswelle auch über ein Magnetlager miteinander gekoppelt werden. Eine solche Ausgestaltung hat den Vorteil, dass die entstehenden Reibungskräfte sehr niedrig sind.

Die erfindungsgemäße Übertragungsvorrichtung kann in vorteilhafter Weise in eine Reihe von kinematischen Systemen integriert werden.

Beispielsweise kann sie vorteilhaft als Kupplungselement eingesetzt werden, um eine Übertragung mit Soft-Start-Eigenschaften zu realisieren. Dabei kann an die Antriebswelle ein Antriebselement (z.B. ein Motor) und an die Abtriebswelle eine anzutreibende Last angeschlossen werden.

Weiterhin kann die Übertragungsvorrichtung vorteilhaft in Getriebe (z.B. in Planetengetriebe) integriert werden, wobei die elastischen Eigenschaften (Spiel, Hysterese) an die Getriebeparameter angepasst werden können. Dabei kann ausgenutzt werden, dass viele Getriebe eine offene Architektur nach dem Baukastenprinzip aufweisen.

Ein eine kinematische Kette eingebunden kann die erfindungsgemäße Übertragungsvorrichtung mechanische Spannungen im Stillstand vermeiden. Bei herkömmlichen Geräten unterliegen die Elemente der kinematischen Kette strukturellen Spannungen nachdem die Anregung auf Null gesetzt wird. Bei Verwendung der erfindungsgemäßen Übertragungsvorrichtung können diese (Rest-)Spannungen nicht nur reduziert sondern komplett eliminiert werden. Bei elektromechanischen Aktuatoren kann die Spindelmutter wieder zur Nullposition zurückgefahren werden, was zu einer Entlastung und Aufhebung der Spannungen führt. Bei rein mechanischen Aktuatoren wird eine Spannungsreduzierung durch eine nicht selbsthemmende Spindel ermöglicht.

Ein weiteres Anwendungsgebiet sind bidirektionale Aktuatoren, in welchen Antriebswelle und Abtriebswelle wechseln bzw. vertauscht werden können. Ein Beispiel hierfür ist ein Aktuator um eine Tür zu öffnen. Dabei kann ein Motor auf einer Seite (beispielsweise an der Antriebswelle) vorgesehen werden, die Tür kann jedoch auch manuell in der anderen Richtung bewegt werden. Um ein harmonisches Verhalten zu realisieren sind Elastizität und Hystereseeigenschaften notwendig, die von der vorliegenden Übertragungsvorrichtung bereitgestellt werden können.

### Bezugszeichenliste

- 1: Antriebswelle
- 2: Anschlag
- 3: Ringmagnet
- 4: Spindelwelle
- 5: Spindelmutter
- 6: Ringmagnet
- 7: Anschlag
- 8: Ringmagnet
- 9: Zylinderhülse
- 10: Abtriebswelle
- 11: Kugellager
- 12: Keilelemente
- 13: Keilelement
- 14: Lageraufnahme
- 15: Lageraufnahme
- 16: Keilelemente
- 17: Keilelemente
- 18: Führungsstangen
- 19: Anschlussflansch
- 21: Kugellager
- 22: Gehäuse
- 23: Gehäusedeckel
- 24: gezahnter Abschnitt
- 25: Verzahnung
- 30: Spiralfeder
- 31: Spiralfeder
- 32: Axiallager
- 33: Axiallager
- 35: Gummielement
- 36: Gummielement
- 37: Axiallager
- 38: Axiallager

## Patentansprüche

1. Übertragungsvorrichtung zur Übertragung eines Drehmoments zwischen einer Antriebswelle und einer Abtriebswelle, mit:
- einer Antriebswelle (1), welche einen Spindelwellenabschnitt (4) aufweist;
- einer Spindelmutter (5), welche auf dem Spindelwellenabschnitt (4) translatorisch bewegbar ist;
- einem Abtriebselement (9, 10), welches eine Abtriebswelle (10) aufweist und welches mit der Spindelmutter (5) rotatorisch in Eingriff steht; und
- einer Dämpfungseinrichtung (3, 8; 30, 31; 35, 36), welche zur Dämpfung der translatorischen Bewegung der Spindelmutter (5) auf dem Spindelwellenabschnitt (4) vorgesehen ist
**dadurch gekennzeichnet, dass**
an den beiden Enden des Spindelwellenabschnitts (4) jeweils ein Anschlag (2, 7) vorgesehen ist, welcher die translatorische Bewegung der Spindelmutter (5) begrenzt, und dass
die Dämpfungseinrichtung (3, 8; 30, 31; 35, 36) zur elastischen Dämpfung Spiralfedern (30, 31) aufweist, welche jeweils zwischen der Spindelmutter (5) und den beiden Anschlägen (2, 7) angeordnet sind.

2. Übertragungsvorrichtung nach Anspruch 1,
**dadurch gekennzeichnet, dass** zwischen den Spiralfedern (30, 31) und der Spindelmutter (5) jeweils ein Axiallager (32, 33) vorgesehen ist.

3. Übertragungsvorrichtung nach Anspruch 2,
**dadurch gekennzeichnet, dass** die eine Spiralfeder (30) an einem Ende mit dem einem Anschlag (2) und an ihrem anderen Ende mit einer Seite des einen Axiallagers (32) verbunden ist, und dass die andere Spiralfeder (31) an einem Ende mit dem anderen Anschlag (7) und an ihrem anderen Ende mit einer Seite des anderen Axiallagers (33) verbunden ist.

4. Übertragungsvorrichtung nach Anspruch 3,
**dadurch gekennzeichnet, dass** die anderen Seiten der Axiallager (32, 33) fest mit der Spindelmutter (5) verbunden sind.

5. Übertragungsvorrichtung nach Anspruch 1,
**dadurch gekennzeichnet, dass** die Spiralfedern (30, 31) fest mit der Spindelmutter (5) verbunden und mittels Axiallagern mit den Anschlägen (2, 7) verbunden sind.

6. Übertragungsvorrichtung nach einem der Ansprüche 11 bis 18,
**dadurch gekennzeichnet, dass** die Spiralfedern (30, 31) vorgespannt sind.

7. Übertragungsvorrichtung zur Übertragung eines Drehmoments zwischen einer Antriebswelle und einer Abtriebswelle, mit:
- einer Antriebswelle (1), welche einen Spindelwellenabschnitt (4) aufweist;
- einer Spindelmutter (5), welche auf dem Spindelwellenabschnitt (4) translatorisch bewegbar ist;
- einem Abtriebselement (9, 10), welches eine Abtriebswelle (10) aufweist und welches mit der Spindelmutter (5) rotatorisch in Eingriff steht; und
- einer Dämpfungseinrichtung (3, 8; 30, 31; 35, 36), welche zur Dämpfung der translatorischen Bewegung der Spindelmutter (5) auf dem Spindelwellenabschnitt (4) vorgesehen ist
**dadurch gekennzeichnet, dass** die Dämpfungseinrichtung (3, 8; 30, 31; 35, 36) zur elastischen Dämpfung wenigstens zwei Magneten (3, 8) aufweist, die jeweils an einem Ende des Spindelwellenabschnitts (4) angeordnet sind.

8. Übertragungsvorrichtung nach Anspruch 7,
**dadurch gekennzeichnet, dass** die Magneten als (3, 8) Ringmagneten, Elektromagneten oder Permanentmagneten ausgebildet sind.

9. Übertragungsvorrichtung nach einem der Ansprüche 7 und 8,
**dadurch gekennzeichnet, dass** die Spindelmutter (5) zwei Ringmagneten (6) aufweist, die jeweils gegenüber den Magneten (3, 8) angeordnet sind, wobei gleichartige Pole der Ringmagneten (6) der Spindelmutter und der Magneten (3, 8) der Dämpfungseinrichtung gegenüber voneinander angeordnet sind, so dass die Spindelmutter (5) im unbelasteten Zustand in der Mitte des Spindelwellenabschnitts (4) gehalten wird.

10. Übertragungsvorrichtung nach einem der vorhergehenden Ansprüche,
**dadurch gekennzeichnet, dass** die Spindelmutter (5) auf dem Spindelwellenabschnitt (4) zu dem Abtriebselement (9, 10) translatorisch bewegbar ist.

11. Übertragungsvorrichtung nach einem der vorhergehenden Ansprüche,
**dadurch gekennzeichnet, dass** das Abtriebselement (9, 10) eine Zylinderhülse (9) aufweist, die drehfest mit der Spindelmutter (4) und starr mit der Abtriebswelle (10) gekoppelt ist.

12. Übertragungsvorrichtung nach Anspruch 11,
**dadurch gekennzeichnet, dass** die Spindelmutter (4) mittels einer Keilverbindung mit der Zylinderhülse (9) verbunden ist.

13. Übertragungsvorrichtung nach einem der Ansprüche 1 bis 9,
**dadurch gekennzeichnet, dass** die Spindelmutter (5) mit dem Abtriebselement (9, 10) starr verbunden ist.

14. Übertragungsvorrichtung nach einem der vorhergehenden Ansprüche,
**dadurch gekennzeichnet, dass** die Antriebswelle (1) und die Abtriebswelle (10) auf unterschiedlichen Rotationsachsen angeordnet sind.

15. Übertragungsvorrichtung nach einem der vorhergehenden Ansprüche,
**dadurch gekennzeichnet, dass** die Antriebswelle (1) über Kugellager (11) in der Dämpfungseinrichtung (3, 8; 30, 31; 35, 36) gelagert ist.

16. Übertragungsvorrichtung nach einem der vorhergehenden Ansprüche, **gekennzeichnet durch** ein Gehäuse (22) zur Aufnahme der Spindelmutter (5) und der Dämpfungseinrichtung (3, 8; 30, 31; 35, 36).

17. Übertragungsvorrichtung nach einem der vorhergehenden Ansprüche, **gekennzeichnet durch** mindestens einen Hall-Sensor (25), welcher außerhalb des Abtriebelements (9, 10) angeordnet ist, und welcher ein Positionssignal ausgibt, welches von der Position der Spindelmutter abhängt.

18. Drehmomentsensor mit:
einer Übertragungsvorrichtung nach Anspruch 17, und
einer Auswerteeinrichtung (26), welche auf Basis des von dem Hall-Sensor (25) ausgegebenen Positionssignals ein Drehmomentsignal erzeugt, welches vom übertragenen Drehmoment abhängt.

19. Drehmomentsensor nach Anspruch 18,
**dadurch gekennzeichnet, dass** mindestens zwei Hall-Sensoren (25) vorgesehen sind, welche in axialer Richtung entlang des Spindelwellenabschnitts (4) angeordnet sind.

## Claims

1. A transmission device for transmitting a torque between an input shaft and an output shaft, comprising:
- an input shaft (1), which comprises a spindle shaft portion(4);
- a spindle nut (5), which is translationally mobile on the spindle shaft portion (4);
- an output element (9, 10), which comprises an output shaft (10) and which is in rotational engagement with the spindle nut (5); and
- a damping means (3, 8; 30, 31; 35, 36), which is provided for damping the translational motion of the spindle nut (5) on the spindle shaft portion (4),
**characterised in that**
a limit stop (2, 7) is provided at each of the two ends of the spindle shaft portion (4), which limit stop defines the translational motion of the spindle nut (5), and **in that**
the damping means (3, 8; 30, 31; 35, 36) comprises spiral springs (30, 31) for resilient damping, these being arranged in each case between the spindle nut (5) and the two limit stops (2, 7).

2. A transmission device according to claim 1, **characterised in that** a thrust bearing (32, 33) is provided in each case between the spiral springs (30, 31) and the spindle nut (5).

3. A transmission device according to claim 2, **characterised in that** the one spiral spring (30) is connected at one end to the one limit stop (2) and at its other end to one side of the one thrust bearing (32), and **in that** the other spiral spring (31) is connected at one end to the other limit stop (7) and at its other end to one side of the other thrust bearing (33).

4. A transmission device according to claim 3, **characterised in that** the other sides of the thrust bearings (32, 33) are firmly connected to the spindle nut (5).

5. A transmission device according to claim 1, **characterised in that** the spiral springs (30, 31) are connected firmly to the spindle nut (5) and by means of thrust bearings to the limit stops (2, 7).

6. A transmission device according to any one of claims 11 to 18,
**characterised in that** the spiral springs (30, 31) are pretensioned.

7. A transmission device for transmitting a torque between an input shaft and an output shaft, comprising:
- an input shaft (1), which comprises a spindle shaft portion(4);
- a spindle nut (5), which is translationally mobile on the spindle shaft portion (4);
- an output element (9, 10), which comprises an output shaft (10) and which is in rotational engagement with the spindle nut (5); and
- a damping means (3, 8; 30, 31; 35, 36), which is provided for damping the translational motion of the spindle nut (5) on the spindle shaft portion (4),
**characterised in that** the damping means (3, 8; 30, 31; 35, 36) comprises two magnets (3, 8) for resilient damping, these being arranged in each case at one end of the spindle shaft portion (4).

8. A transmission device according to claim 7, **characterised in that** the magnets (3, 8) take the form of ring magnets, electromagnets or permanent magnets.

9. A transmission device according to either one of claims 7 and 8,
**characterised in that** the spindle nut (5) comprises two ring magnets (6), which are arranged in each case opposite the magnets (3, 8), identical poles of the ring magnets (6) of the spindle nut and of the magnets (3, 8) of the damping means being arranged opposite one another, such that, when not loaded, the spindle nut (5) is held in the middle of the spindle shaft portion (4).

10. A transmission device, according to any one of the preceding claims,
**characterised in that** the spindle nut (5) is translationally mobile on the spindle shaft portion (4) relative to the output element (9, 10).

11. A transmission device according to any one of the preceding claims,
**characterised in that** the output element (9, 10) comprises a cylindrical case (9), which is coupled for rotation with the spindle nut (4) and rigidly with the input shaft (10).

12. A transmission device according to claim 11, **characterised in that** the spindle nut (4) is connected to the cylindrical case (9) by keying.

13. A transmission device according to any one of claims 1 to 9,
**characterised in that** the spindle nut (5) is connected rigidly to the output element (9, 10).

14. A transmission device according to any one of the preceding claims,
**characterised in that** the input shaft (1) and the output shaft (10) are arranged on different axes of rotation.

15. A transmission device according to any one of the preceding claims,
**characterised in that** the input shaft (1) is mounted in the damping means (3, 8; 30, 31; 35, 36) by way of ball bearings (11).

16. A transmission device according to any one of the preceding claims,
**characterised by** a housing (22) for accommodating the spindle nut (5) and the damping means (3, 8; 30, 31; 35, 36).

17. A transmission device according to any one of the preceding claims,
**characterised by** at least one Hall effect sensor (25), which is arranged outside the output element (9, 10) and which emits a position signal, which depends on the position of the spindle nut.

18. A torque sensor comprising:
a transmission device according to claim 17, and
an evaluating means (26), which generates a torque signal on the basis of the position signal emitted by the Hall effect sensor (25), which torque signal depends on the transmitted torque.

19. A torque sensor according to claim 18, **characterised in that** at least two Hall effect sensors (25) are provided, which are arranged axially along the spindle shaft portion (4).

## Revendications

1. Dispositif de transmission destiné à la transmission d'un couple entre un arbre moteur et un arbre de sortie, doté de :
- un arbre moteur (1) présentant une section d'arbre de broche (4) ;
- un écrou de broche (5) pouvant être déplacé par translation sur la section d'arbre de broche (4) ;
- un élément de sortie (9, 10) présentant un arbre moteur (10) et se trouvant rotativement en prise avec l'écrou de broche (5) ; et
- un dispositif d'amortissement (3, 8 ; 30, 31 ; 35, 36) prévu pour amortir le mouvement de translation de l'écrou de broche (5) sur la section d'arbre de broche (4)
**caractérisé par le fait que**
une butée (2, 7) est prévue au niveau de chacune des deux extrémités de la section d'arbre de broche (4), limitant le mouvement de translation de l'écrou de broche (5),
et **par le fait que**
le dispositif d'amortissement (3, 8 ; 30, 31 ; 35, 36) présente des ressorts en spirale (30, 31) destinés à l'amortissement élastique, disposés entre l'écrou de broche (5) et les deux butées (2, 7).

2. Dispositif de transmission selon la revendication 1, **caractérisé par le fait que**
un palier axial (32, 33) est prévu respectivement entre les ressorts en spirale (30, 31) et l'écrou de broche (5).

3. Dispositif de transmission selon la revendication 2, **caractérisé par le fait que**
un ressort en spirale (30) est relié au niveau d'une extrémité à une butée (2) et au niveau de son autre extrémité à un côté du palier axial (32), et que l'autre ressort en spirale (31) est relié au niveau d'une extrémité à l'autre butée (7) et au niveau de son autre extrémité à un côté de l'autre palier axial (33).

4. Dispositif de transmission selon la revendication 3, **caractérisé par le fait que**
les autres côtés des paliers axiaux (32, 33) sont reliés de manière fixe à l'écrou de broche (5).

5. Dispositif de transmission selon la revendication 1, **caractérisé par le fait que**
les ressorts en spirale (30, 31) sont reliés de manière fixe à l'écrou de broche (5) et sont reliés aux butées (2, 7) au moyen des paliers axiaux.

6. Dispositif de transmission selon l'une des revendications 11 à 18,
**caractérisé par le fait que**
les ressorts en spirale (30, 31) sont précontraints.

7. Dispositif de transmission destiné à la transmission d'un couple entre un arbre moteur et un arbre de sortie, doté de :
- un arbre moteur (1) présentant une section d'arbre de broche (4) ;
- un écrou de broche (5) pouvant être déplacé par translation sur la section d'arbre de broche (4) ;
- un élément de sortie (9, 10) présentant un arbre moteur (10) et se trouvant rotativement en prise avec l'écrou de broche (5) ; et
- un dispositif d'amortissement (3, 8 ; 30, 31 ; 35, 36) prévu pour amortir le mouvement de translation de l'écrou de broche (5) sur la section d'arbre de broche (4)
**caractérisé par le fait que**
le dispositif d'amortissement (3, 8 ; 30, 31 ; 35, 36) présente au moins deux aimants (3, 8) destinés à l'amortissement élastique, disposés chacun au niveau d'une extrémité de la section d'arbre de broche (4).

8. Dispositif de transmission selon la revendication 7, **caractérisé par le fait que**
les aimants (3, 8) se présentent sous forme d'aimants annulaires, d'électroaimants ou d'aimants permanents.

9. Dispositif de transmission selon l'une des revendications 7 et 8, **caractérisé par le fait que**
l'écrou de broche (5) présente deux aimants annulaires (6) disposés chacun en regard des aimants (3, 8), les pôles identiques des aimants annulaires (6) de l'écrou de broche et des aimants (3, 8) du dispositif d'amortissement étant disposés en regard les uns des autres, de telle sorte que l'écrou de broche (5) est maintenu, à l'état non soumis à une charge, au centre de la section d'arbre de broche (4).

10. Dispositif de transmission selon l'une des revendications précédentes,
**caractérisé par le fait que**
l'écrou de broche (5) peut être déplacé par translation sur la section d'arbre de broche (4) par rapport à l'élément de sortie (9, 10).

11. Dispositif de transmission selon l'une des revendications précédentes,
**caractérisé par le fait que**
l'élément de sortie (9, 10) présente une douille cylindrique (9) couplée solidaire en rotation à l'écrou de broche (4) et de manière rigide à l'arbre moteur (10).

12. Dispositif de transmission selon la revendication 11, **caractérisé par le fait que**
l'écrou de broche (4) est relié au moyen d'un clavetage à la douille cylindrique (9).

13. Dispositif de transmission selon l'une des revendications 1 à 9, **caractérisé par le fait que**
l'écrou de broche (5) est relié de manière rigide à l'élément de sortie (9, 10).

14. Dispositif de transmission selon l'une des revendications précédentes,
**caractérisé par le fait que**
l'arbre moteur (1) et l'arbre de sortie (10) sont disposés sur des axes de rotation différents.

15. Dispositif de transmission selon l'une des revendications précédentes,
**caractérisé par le fait que**
l'arbre moteur (1) est logé par roulement à billes (11) dans le dispositif d'amortissement (3, 8 ; 30, 31 ; 35, 36).

16. Dispositif de transmission selon l'une des revendications précédentes,
**caractérisé par**
un boîtier (22) destiné à recevoir l'écrou de broche (5) et le dispositif d'amortissement (3, 8 ; 30, 31 ; 35, 36).

17. Dispositif de transmission selon l'une des revendications précédentes,
**caractérisé par**
au moins un capteur Hall (25) disposé en dehors de l'élément de sortie (9, 10) et émettant un signal de position dépendant de la position de l'écrou de broche.

18. Capteur de couple doté de :
un dispositif de transmission selon la revendication 17, et
un dispositif d'évaluation (26) produisant sur la base du signal de position émis par le capteur Hall (25) un signal de couple dépendant du couple transmis.

19. Capteur de couple selon la revendication 18, **caractérisé par le fait que** au moins deux capteurs Hall (25) sont prévus, disposés dans le sens axial le long de la section d'arbre de broche (4).
